# EUROPEAN PATENT SPECIFICATION

(11) **EP 1 066 903 B1**
(45) Date of publication and mention of the grant of the patent: **26.05.2004**
(21) Application number: 00114067.2
(22) Date of filing: 06.07.2000
(51) Int. Cl.: B23C 5/22, B23C 5/20

(54) **Cutting insert**
Schneideinsatz
Plaquette de coupe

(30) Priority: 09.07.1999 JP 19679499; 12.05.2000 JP 2000140972
(43) Date of publication of application: 10.01.2001
(73) Proprietor: Mitsubishi Materials Corporation, Tokyo (JP)
(72) Inventor: Hirose, Takeshi, Tsukuba Plant, Ishige-machi, Yuuki-gun, Ibaraki-ken (JP); Kitagawa, Yoshihiro, Tsukuba Plant, Ishige-machi, Yuuki-gun, Ibaraki-ken (JP); Hasegawa, Ken, Tsukuba Plant, Ishige-machi, Yuuki-gun, Ibaraki-ken (JP); Suzuki, Yuuichi, Tsukuba Plant, Ishige-machi, Yuuki-gun, Ibaraki-ken (JP)
(74) Representative: HOFFMANN - EITLE

(56) References cited:
- EP-A- 0 404 744
- US-A- 4 776 732
- US-A- 4 808 045
- US-A- 5 388 932
- US-A- 5 720 583
- US-A- 5 876 154

## Description

### BACKGROUND OF THE INVENTION

### Field of the invention

This invention relates to a cutting insert used for particularly for use in intermittent cutting which may be set to several milling tools as face milling cutters, end-mills etc..

### Description of the Background

Fig.4 is a front view of the cutting insert as one example of the conventional technology. Fig.5 is a cross sectional view along the X-X line of the cutting insert shown in Fig. 4.

Fig. 6 is a central sectional view of a face milling cutter equipped with the cutting insert shown in Fig.4. As shown in Fig. 4, the cutting insert 10 of board type is approximately square shaped (Fig. 4 shows an approximately square shape), and has an undersurface 11 which makes a taking a seat side, and an upper surface 12 opposite the under surface 11.

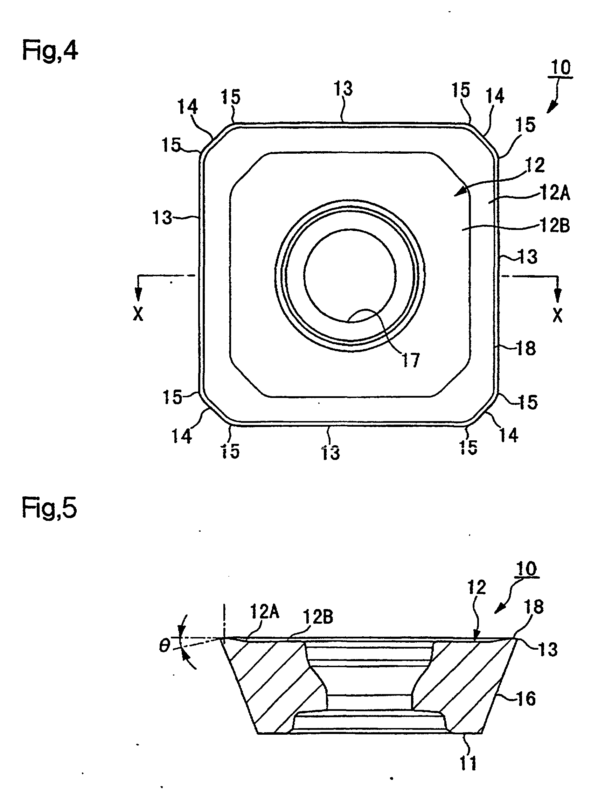

The main cutting tooth 13 is formed of a ridge line portion adjacent the upper surface 12, an approximately straight line-like sub cutting tooth 14 is formed between and by two main cutting teeth 13 and 13, respectively, and circular corner teeth 15 are formed between the main cutting teeth 13 and the sub cutting teeth 14 , and a circular corner tooth smoothly connects both cutting teeth 13 and 14. The side face 16 formed between the under surface 11 and the upper surface 12 inclines towards outside of a field 12 and forms a positive tip, as shown in Fig. 5. And the upper surface, 12 defines a rake face, and the side face 16 defines a flank face.

Moreover, the central portion of the upper surface 12 and the under surface 11 is penetrated to form a penetration for a screw. All the circumferences of the ridge line portion which runs approximately four rounds of the upper surface 12 is provided with the honing (honing surface) 18 , as shown in Fig. 4 and Fig. 5. That is, the intersection of the ridge line portion of the honing 18 and the side face 16 define the main cutting tooth 13, the sub cutting tooth 14 and the corner tooth 15. The section of this honing 18 which perpendicularly intersects with the ridge line portion might be formed as a horizontal line, and it might incline from this honing 18 towards the outside of the cutting insert 10 to a level surface. The inclination angle (honing angle) θ might be set constant.

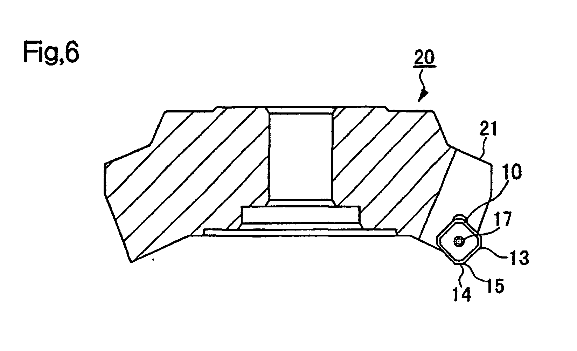

The upper surface 12 of the cutting insert 10 consists of upper surface inclination portion 12A inclined so that the honing 18 is intersected, it could extend towards the central portion of the cutting insert 10 downwards to the level surface and might become a slope, and the upper surface level part 12B which is connected to this upper surface inclination part 12A, is leveled near the central portion of the cutting insert 10. In addition, the connection between the upper surface inclination part 12A and upper surface level part 12B is smooth. As shown in Fig. 6, a tip perimeter of a main cutter body 21 in a milling cutter 20 for instance is equipped with the cutting insert, and a part of a work material is intermittently cut off by carrying out rotation cutting of the main cutter body 21. The cutting insert 10 is equipped so that the main cutting tooth 13 projects toward the perimeter side of the main cutter body 21,and also so that sub cutting tooth 14 turns to the down tooth of the main cutter body 21. In case of rotation cutting by the face milling cutter 20, the main cutting is performed by the main cutting tooth 13, and the finished surface is performed by the sub cutting tooth 14.

### Object of this invention

Although in the above mentioned cutting insert 10 the main cutting teeth 13 and the sub cutting teeth 14 are smoothly connected by circular corner teeth 15, the cutting insert easily breaks out in the corner teeth 15 by the shocks at the time at which each cutting tooth 13, 14, 15 begins to hit to the work material at the time of cutting.

Moreover, the corner tooth 15 in a center side of rotation such as in a face milling cutter and an end mill etc., bites the chips generated by cutting of the sub cutting tooth 14 and, as a result, the finished surface is damaged. Moreover, as a result of the crush of the chip into the above mentioned corner tooth 15, the corner tooth 15 will be broken. Furthermore, when vibrations of the work material propergate to the corner tooth 15 at the time of cutting, problem also occurs that the corner tooth 15 will be broken. This invention was conducted in view of the above mentioned problems, and aims to offer a cutting insert which increases the break resistant property of the corner portion near the intersection part of the main cutting tooth and the sub cutting tooth at the time of cutting.

### Summary of the invention

This object is solved by a cutting insert as defined in claim 1.

In order to attain the purpose which solves the above mentioned object, the cutting insert of this invention is characterized in that the honing angle of the corner tooth connecting the main cutting tooth and the sub cutting tooth is larger than each honing angle of the above mentioned main cutting tooth and sub cutting tooth of the cutting insert which form a honing face in a cutting tooth.

In a cutting insert as above mentioned, since the honing angle at a corner edge is enlarged compared with the honing angle over the main cutting tooth and sub cutting tooth, the break resistance of the corner tooth is increased. Therefore, for example, it can prevent breaking out in the portion of the corner tooth by the shock which act on the tooth edge at a starting time of cutting. And since the honing angle is enlarged only at the corner tooth, the sharpness of the main cutting tooth and a sub cutting tooth is not reduced.

Furthermore, the cutting insert is characterized by the height of the corner tooth from the under face which defines the seat face being lower than the height of the sub cutting tooth. Since the height of the corner tooth from the under face is lower than the height of a sub cutting tooth of the cutting insert having the above mentioned construction, a corner tooth is disposed in a lower stage than a sub cutting tooth for the direction of rotation of the face milling cutter and the end mill etc., when the chips generated by cutting of the sub cutting tooth flowed to the center direction of rotation , it can prevent the corner tooth from biting chips by the side of a rotation center, or from being broken by the crash of the chips into the corner tooth. Moreover, very small clearance can be performed between the corner tooth used for cutting and the work material, so that when vibrations of the work material propagate to the corner tooth at a time of cutting, breaking of a corner tooth can be prevented.

Furthermore, it is characterized in that the honing angle α of the above mentioned main cutting tooth is set in a range of 0°<α< 60°and the honing angle β of above mentioned sub cutting tooth is set in a range of 0°<β< 60°and the honing angle γ is set in a range 5°< γ < 80° for the cutting insert of this invention defined in claim 2. In the above mentioned cutting insert, if the honing angle α of the main cutting tooth is less than 0°, the effect of forming the honing face ,i.e., the break resistant property of the main cutting tooth cannot be raised, and if it is 60°, the sharpness of the main cutting tooth will drop.

Similarly, if the honing angle β of the sub cutting tooth is less than 0°, the break resistant property of the sub cutting tooth cannot be raised, if it is 60°, the sharpness of the sub cutting tooth will drop. Furthermore, if the honing angle γ of the corner tooth is less than 5°, the break resistant property of the corner tooth cannot be raised, and if it is 80°, the sharpness of the corner tooth will drop.

### Brief Description of the Drawings

A more complete appreciation of the invention and many of the attendant advantages thereof will be readily obtained as the same becomes better understood by reference to the following detailed description when considered in connection with the accompanying drawings wherein:

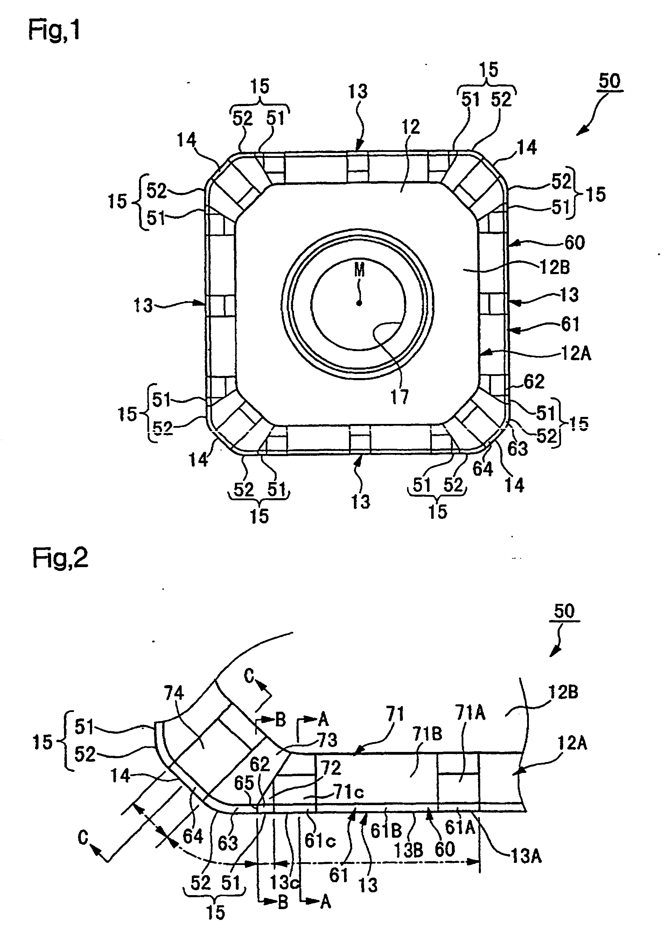

- Figure 1: is the front view of a cutting insert of one embodiment of this invention;
- Figure 2: is an enlarged front view in principal portion of the cutting insert shown in figure 1;

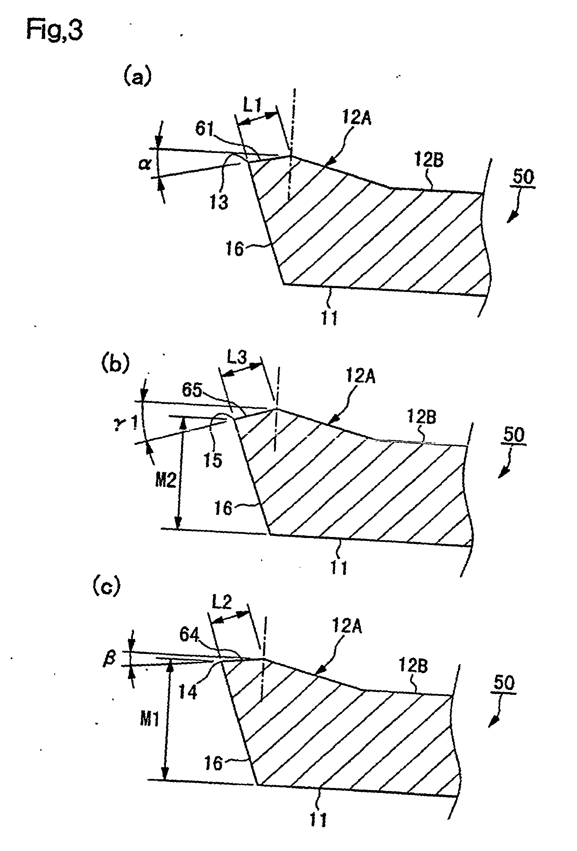

- Figure 3: (a) is a cross sectional view of the cutting insert shown in figure 2 along the A-A line, and
(b) is a cross sectional view of the cutting insert shown in figure 2 along the B-B line, and
(c) is a cross sectional view of the cutting insert shown in figure 2 along the C-C line;
- Figure 4: is a front view of a conventional cutting insert;
- Figure 5: is a cross sectional view of the cutting insert shown in figure 4 along the X-X line;
- Figure 6: is a central sectional view of a face milling cutter equipped with the cutting insert shown in figure 4.

### Explanation of Marks

- 10, 50: cutting insert
- 13: main cutting tooth
- 14: sub cutting tooth
- 15: corner tooth
- 51: 1st corner tooth
- 52: 2nd corner tooth
- 60: honing
- 61: 1st honing
- 62: 2nd honing
- 63: 3rd honing
- 64: 4th honing
- 65: intersecting portion
- α: 1st honing angle
- β: 2nd honing angle
- γ: 3 rd honing angle

### Detailed Description of the Preferred Embodiments

It is explained, hereafter, one practical embodiment of the cutting insert of this invention, referring to the attached drawings.
Figure 1 is a front view of a cutting insert of this invention.
Figure 2 is an enlarged front view of a principle portion of the cutting insert shown in figure 1.
Figure 3 (a) is a A-A line cross sectional view of a cutting insert shown in figure 2 and figure 3(b) is a B-B line cross sectional view of a cutting insert shown in figure 2 and figure (c) is a c-c line cross sectional view of a cutting insert shown in figure 2.

In addition, the same portion as in the conventional technology mentioned above are marked by the same reference signs. The cutting insert 50 by this example is formed in the shape of an approximately quadrangle plank( approximately square shape in Figure 1) which is symmetrical to a central axis M, and the insert is formed as positive insert. The side face 16 made into a frank face inclines outside toward the upper face 12 which is formed as a rake face from the under face 11 which is formed as a seat face of the cutting insert 50.

As shown in Figure 1, the main cutting tooth 13 is formed in a portion of the ridge line which forms approximately four faces of the quadrangle on the upper face 12 respectively. The approximately straight line-like sub cutting tooth 14 is formed between the two main cutting teeth 13 and 13 which intersect an adjoin approximately rectangular. An approximately circular corner tooth which connects the main cutting tooth 13 and sub cutting tooth 14 is formed on both sides respectively. The corner tooth is formed of both the 1st corner tooth of an approximately straight line-like in a plane view from the main cutting tooth13 side toward the sub cutting tooth 14 side and an approximately circular 2nd corner tooth 52. The connection between each tooth 13 and 51 and 52 and 14 is smooth. The honing 60 (honing face) is given extending the circumferences of the ridge line part which makes approximately 4 rounds of upper face 12. Here, the honing 60 consists of the 1st honing 61 , the 2nd honing 62, the 3 rd honing 63 , and the 4th honing 64 in an order from the main cutting tooth 13 toward the sub cutting tooth 14 corresponding to each tooth 13, 14, 51, and 52 formed in the intersection ridge line portion of a honing 60 and the side face 16, as shown in Figure 2. The honing 60 inclines so that it may get down to the level surface and it may become a slope. The 1st honing angle α (for example, 12°) of 1st honing 61 by which the perimeter side shown in Figure 3(a) is made the main cutting tooth 13 is made larger the 2nd honing angle β (for example 8°) of the 4th honing 64 by which the perimeter side shown in Figure 3 (c) is made the sub cutting tooth 14 (α>β) .

Furthermore, as shown in Figure 3 (b), the 3 rd honing angle γ (for example, 20 °) in the intersection portion 65 of the 2nd honing 62 and the 3 rd honing 63 is made larger than 1st honing angle α (γ>α>β). And, the honing angle of the intersection ridge line portion of the 1st honing 61 and the 2nd honing 62 is made equal to 1st honing angle α, the honing angle of the 2nd honing 62 ,namely, the honing angle γ to the corner tooth is set up so that it may become gradually larger to the 3^{rd} honing angle γ according to go to the intersection portion 65 (on left side in Figure 2). On the other hand, the honing angle of the intersection ridge line portion of the 3 rd honing 63 and the 4th honing 64 is made equal to the 2nd honing angle β, and the honing angle of the 3rd honing 63, namely, the honing angle γ to the corner tooth 15 is set up so that it may become gradually smaller from the 3 rd honing angle γ to the 2nd honing angle β, according to the 4th honing 64 from intersection portion 65 ( to left upper side, in Figure 2). That is, as shown in Figure 4, the 1st corner tooth 51 formed in the intersection ridge line portion of the 2nd honing 62 and side face 16 inclines so as to slope down from the main cutting tooth toward the intersection portion 65, and the 2nd corner tooth 52 formed in the intersection ridge line portion of the 3 rd honing 63 and side face 16 inclines so as to slope down from the sub cutting tooth 14 toward the intersection portion 65. And, the 1st corner tooth and 2nd corner tooth, namely, 51 and 52 are formed so as to form the smooth convex curve toward the under face 11 the whole , and preferably, so that the corner in the plane view may mostly approach to the under face, namely, the honing angle γ to the corner tooth15 may make maximum value (the 3 rd honing angle γ ).

Here, if the honing angle γ to the corner tooth 15 is below the 1st honing angle α (γ<α), the effect of raising the break resistant property of the corner tooth 15 cannot arise. Moreover, the 1st honing angle α is set in the range of 0°< α < 60°, and is preferably made into 0°< α < 45°. Here, if the 1st honing angle α is less than 0 °, the effect providing a honing 60, namely, the break resistant property of the main cutting tooth 13 cannot be raised , and if it is 60 °or more, the sharpness of the main cutting tooth 13 decreases.

Moreover, the 2nd honing angle β is set in a range of 0 °< β < 60°, and preferably, in a range of 0 °< β < 45°. Here, if the honing angle is less than 0°, the break resistant property of the sub cutting tooth 14 cannot be raised. If it is 60°or more, the sharpness of the sub cutting tooth 14 will fall. Furthermore, the honing angle γ of the corner tooth 15 is set in a range of 5°< γ < 80°. Here, if the honing angle γ of the corner tooth 15 is less than 5°, the break resistant property of the corner tooth15 cannot be raised, if it is 80 °or more, the sharpness of the corner tooth 15 will fall.

In addition, as shown in Figure 3 (a), (b), and(c), the section where the honing 60 intersects perpendicularly with the ridge line portion, the side face 16 is formed in a straight line for example, and the length of this straight line ,regarding the width of honing is, for example, determined as follows: the 1st honing width L1 of the honing 61 is made longer than the 2nd honing width L2 of the 4th honing 64 ( L1 > L2 ), and the honing width L3 of the intersection portion 65 is made longer than the 1st honing width L1 ( L3 > L1 > L2 ). And the honing width of the 2nd honing 61 is enlarged from the 1st honing width L1 to the 3rd honing width L3, from the 1st honing 61 toward the intersection portion 65 , and the honing width of the 3rd honing 63 is made small from the 3 rd honing width L3 to the 2nd honing width L2, from the intersection portion 65 toward the 4th honing 64.

Furthermore, each honing width of each honing 61A, 61B, and 61C of the main cutting tooth which constitutes the 1st honing 61 is made equal to the 1st honing width L1 and is set constant. Moreover, the height M2 from the under face 11 which forms the seat face of the corner tooth 15 is made lower than the height M1 from the under face 11 of the sub cutting tooth 14 (Ml> M2).

As shown in Figure 2, the upper inclination portion 12A of the cutting insert 50 which intersects honing 60 consists of the 1st upper face inclination portion 71, the 2nd upper face inclination portion 72, the 3rd upper face inclination portion and the 4th upper face inclination portion 74 which each intersect honings 61,62, 63, and 64, respectively. Furthermore, the 1st upper face inclination portion 71 consists of the 1st main cutting tooth inclination portion71A, the 2nd main cutting tooth inclination portion 71B and the 3 rd main cutting tooth inclination portion 71C which each connect to the honings 61A, 618,and 61C of the main cutting tooth, respectively. Each inclination portion 71A,71B, and 71C of the main cutting tooth is formed as flat face ,for example . As shown in Figure 2 and Figure 4, the 1st intersection ridge line 75 is located in lower portion in a perpendicular direction than the 3rd intersection ridge line 76 with the 3rd main cutting tooth inclination portion 71C and the 3 rd main cutting tooth honing 61C. The 2nd upper face inclination portion 72 and the 4th upper face inclination portion 74 is formed as flat face for example, and this upper face inclination portion 72, 74 is connected smoothly by the 3 rd upper face inclination portion 73 which is primarily concave. Each upper face inclination portion 7..., 74 is connected smoothly with the upper face leveled portion 12B near the central portion of the cutting insert 50. As mentioned above, according to the cutting insert 50 of this example, the 1st honing angle α of the ist honing 61 is made larger than the 2nd honing angle β of the 4 h honing 64 in which the perimeter side is the sub cutting tooth 14 (α >β), and the 3rd honing angle γ in the intersection portion 65 of the 2nd honing 62 and the 3rd honing 63 is further larger than the 1st honing angle α, and the honing angle γ of the corner tooth 15 is larger than the 1st honing angle α (γ >α > β) . Therefore, It is possible to increase the break resistant property of the corner tooth 15 without decreasing the sharpness with the sub cutting tooth 14 performing finish cutting. For example, in a time of the bite to the work material, it is possible to reduce the breakage of the bearing on the edge of the corner tooth 15 by the shock which reacts to the edge of the cutting tooth.
Furthermore, since the height M2 from the under face 11 which forms the seat face of the corner tooth 15 is lower than the height M1 of a sub cutting tooth, the corner tooth 15 will have fallen back to the rotating direction of face milling cutter etc. compared to the sub cutting tooth 14 ,when the chips generated by cutting of a sub cutting tooth 14 have flowed to the center direction of a rotation, it prevents the corner tooth 15 by the side of a rotation center biting chips. Moreover, it can prevent the chip's crash into the corner tooth 15 and the corner tooth 15 being broken. Moreover, very small clearance can be performed between the corner tooth 15 used for cutting and the work material, the vibration of the work material propagating to the corner tooth in a time of cutting. As a result, breaking of the corner tooth 15 can be prevented. Furthermore, the 1st honing angle α is set in the range of 0 °< α <60°, if the 1st honing angle α is less than 0 °, the effect giving the honing 60, namely, the improvement of the break resistant property of main cutting tooth 13 is not gained, conversely, if it is 60 °or more, the sharpness of the of the main cutting tooth 13 will fall. Similarly, the 2nd honing angle β is set in the range of 0 °< β < 60°, and if the 2nd honing angle β is less than 0°, the improvement of the break resistant property of the sub cutting tooth 14 is not expected, conversely, if it is 60 °or more, the sharpness of the sub cutting tooth 14 will fall. Furthermore, the honing angle γ of the corner tooth 15 is set in the range of 5°< γ < 80°, if the honing angle γ of the corner tooth 15 is less than 5 °, the improvement of the corner tooth 15 is not expected, conversely, if it is 80° or more, the sharpness of the corner tooth will fall. In addition, in this example, the 1st honing angle α of the 1st honing 61 the perimeter of which side is formed as main cutting tooth 13 is larger than the 2nd honing angle β of the 4th honing 64 the perimeter side of which is formed as sub cutting tooth 14 (α>β). The invention shall not be limited to this example, the 1st honing angle α may also be below the 2nd honing angle (β (α < β) . Briefly, the 1st honing angle α and the 2nd honing angle β) should be just smaller than the honing angle γ of the corner tooth 15 .

In addition, in this example, the 1st honing width L1 is longer than the 2nd honing width L2 (L1 > L2), the 3rd honing width L3 is longer than the 1st honing width L1 (L3 > L1 > L2),but it shall not be limited to this example. Each honing width L1, L2, L3 may be mutually made equal (L1 = L2 = L3 ), and the size relations between the honing width is no problem. In addition, in this example, the 1st honing width L1 is made longer than the 2nd honing width L2 ( L1 > L2 ), the 3rd honing width L3 is made longer than the 1st honing width L1 (L3 > L1 > L2 ),but the invention is not limited to this example. The honing width L1, L2 , and L3 may be mutually made equal (L1 = L2 = L3 ) , other size relations are also permitted.

Briefly, the mutual size relation of each honing width L1, L2, and L3 is not particularly limited. Moreover, how to make the honing 60 may be any method such as fabrication by machining or forming by pressing the mold may be used. Moreover, the tip of the honing 60 may be formed so that it may have proper curvature by cross sectional view , and the honing 60 may be made into double honing. Moreover, in this example, although the cutting insert 50 is considered as having the shape of an approximately square plate , it may have the shape of a polygon board of a triangle or other shapes without being limited to this square shape. Moreover, although in this example the case where the cutting insert 50 was equipped to the face milling cutter for shoulder cutting is explained, various kinds of cutting tools such as other milling tools, such as end mill, and lathe cutting tools such as a byte, may be also equipped.

### [Example]

The cutting test of the work materials was performed the cutting insert of one example of this invention in the case of operation. The cutting insert of a conventional example provides a comparative example. The testing conditions and the results are shown in Tablel.

In Tablel , the width means the 3rd and 4th honing width L2,and L3 [ mm ] of the sub cutting tooth 14 and corner tooth 15, angle means the 2nd and 3 rd honing angle β, γ [°] of the sub cutting tooth 14 and corner tooth 15, and also height means the height of M1, M2 [ mm ] from the under face 11 which forms the seat face of the sub cutting tooth 14 and the corner tooth 15. The cutting test was examined by equipping a cutting insert 1, 2 of this invention and a cutting insert 1, 2, 3 of the conventional example to a face milling cutter 20 shown in Figure 6 , respectively, about these three items. The work material has a length of 190 [ mm ]: SCM 440 was cut at the cutting speed of V=200[m/min], and shock resistant property, cutting resistance and finished surface compared. In the shock resistant property test , the strong intermittent cutting test of the work material in a cutting depth of a p= 2.5 mm was examined by a unit of 2 times in a various feed rate f [ mm / tooth ].

The unit of this feed rate f is the advance speed per one tooth. The number in a table shows the cutting distance to come to be broken, and mark shows that the cutting tooth has been continued to cut for full length without the tooth being broken. In a test of cutting resistance and finished surface, it was examined in a conditions of cutting depth a p = 2.0 [ mm ] and feed rate f = 0.2 [mm/tooth] . It was compared for the cutting resistance about the main component force [ N ], feeding component force .[ N ], back component force [ N ], and a finished surface was compared ten point average roughness Rz [µm] with the visual inspection. As a result, comparing the conventional example 1 with the example of this invention in which the angle β of the sub cutting tooth is different and the height of sub cutting tooth M1 is higher than the height of corner tooth M2 , although the conventional example 1 was able to cut 190 [mm] full length twice only to feeding rate f = 0.12 [ mm / tooth ], the example of the invention was able to cut till the feeding rate f = 0. 20 [ mm / tooth ] over the full length twice. In cutting resistance, good results with smaller resistance were obtained in the example of this invention for the main component force, feed component force and back component force. About the finished surface, the surface roughness in the example of this invention 1 smaller than that of the conventional example, and the surface scratch by bite etc., is also not found out.

Next, it was compared the conventional example 2 with the example of this invention in which the width L2 and L 3 are longer than in example 1. The angle γ of corner tooth in the example 2 of this invention is different from that of the example of conventional example2, and the height of the corner tooth M2 is lower than the height of sub cutting tooth M1. In shock resistant property, it was not be able to cut 190 [mm] full length in every feed rate f in the conventional example. 2 , whereas, it was able to cut over the twice for the full length till the feed rate of f = 0. 24 [mm / tooth] In cutting resistance, it was shown that the main component force and feed component force in the conventional example 2 becomes smaller than that of the example of this invention. However, the back component force in the example 2 of this invention was smaller than that of the conventional example. About the finished surface, the roughness of the finished surface of this invention was smaller than that of the conventional example.

Also the surface scratch by bite, etc., was also not found out. Moreover, when the conventional example 3 in which the angle β, γ were enlarged respectively, and the height M1, M2 was made lower than that of the conventional example 2 was compared to the example 2 of this invention, in shock resistant property, although the conventional example 3 was . able to cut till the feed rate of f =0.16 [ mm / tooth ] over the full length, the example 2 of this invention showed superior property compared to that of the conventional example 3. In cutting resistance, it was shown the small value in the example2 of this invention in all of the main component force, feed component force and back component force. Particularly, remarkable effect was seen in back component force. Regarding to the finished surface, it was seen the rough finished surface and also seen the surface scratch by bite, etc., in conventional example 3, whereas, good results were obtained in the example 2 of this invention. It has been checked that this invention controlled the cutting resistance, and could improve the shock resistant property and surface roughness compared to the conventional example as shown in above. Obviously, numerous modifications and variations of the present invention are possible in light of the above teachings.

It is, therefore, to be understood that within the scope of the appended claims , the invention may be practiced otherwise than as specifically described herein.

## Claims

1. A cutting insert having a seat face (11) and an upper surface (12) opposite the seat face, the cutting insert comprising
main cutting teeth (13) formed on a ridge line portion disposed in the periphery of the cutting insert adjacent the upper surface (12),
sub-cutting teeth (14), each sub cutting tooth being formed between two of the main cutting teeth (13), the sub-cutting teeth (14) being connected to the two main cutting teeth by
corner teeth (15) formed between the main cutting teeth and the sub-cutting teeth and
a honing surface (61, 62, 63, 64) provided on the ridge line portion, the honing surface inclining downwardly towards the outside of the cutting insert at a honing angle (α, β, γ), **characterized in that**
the honing angle(γ) of the corner teeth is larger than the honing angle(α) of the main cutting teeth and the honing angle(β) of the sub-cutting teeth.

2. Cutting insert according to claim 1, **characterized in that** the height from the seat face (11) to the corner tooth (15) connecting a main cutting tooth with a sub-cutting tooth is lower than the height from the seat face (11) to the sub-cutting tooth (14).

3. Cutting insert according to claim 1 or 2, **characterized in that** the honing angle (α) of the main cutting teeth is set in a range of 0° < α < 60°, the honing angle (β) of the sub-cutting teeth is set in a range of 0° < β < 60° and the honing angle (γ) of the corner teeth is set in a range of 5° < γ < 80°

## Patentansprüche

1. Wendeplättchen mit einer Sitzfläche (11) und einer oberen Fläche (12) entgegengesetzt der Sitzfläche, wobei das Wendeplättchen umfasst:
Hauptschneidzähne (13), die auf einem Kantenabschnitt ausgebildet sind, der auf dem Umfang des Wendeplättchens benachbart der oberen Fläche (12) angeordnet ist,
Nebenschneidzähne (14), wobei jeder Nebenschneidzahn zwischen zwei Hauptschneidzähnen (13) ausgebildet ist und die Nebenschneidzähne (14) mit den zwei Hauptschneidzähnen verbunden sind, und zwar durch
Eckzähne (15), die zwischen den Hauptschneidzähnen und den Nebenschneidzähnen ausgebildet sind, und
eine Honfläche (61, 62, 63, 64), die auf dem Kantenabschnitt vorgesehen ist, wobei sich die Honfläche nach innen in Richtung der Außenseite des Wendeplättchens mit einem Honwinkel (α, β, γ) neigen, **dadurch gekennzeichnet, dass**
der Honwinkel (γ) der Eckzähne größer ist als der Honwinkel (α) der Hauptschneidzähne und der Honwinkel (β) der Nebenschneidzähne.

2. Wendeplättchen nach Anspruch 1, **dadurch gekennzeichnet, dass** die Höhe von der Sitzfläche (11) zu dem Eckzahn (15), der einen Hauptschneidzahn mit einem Nebenschneidzahn verbindet, kleiner ist als die Höhe von der Sitzfläche (11) zu dem Nebenschneidzahn (14).

3. Wendeplättchen nach Anspruch 1 oder 2, **dadurch gekennzeichnet, dass** der Honwinkel (α) der Hauptschneidzähne in einem Bereich von 0° < α < 60° festgelegt ist, der Honwinkel (β) der Nebenschneidzähne in einem Bereich von 0° < β < 60° festgelegt ist, und der Hohnwinkel (γ) der Eckzähne in einem Bereich von 5° < γ < 80° festgelegt ist.

## Revendications

1. Plaquette de coupe ayant un siège (11) et une surface supérieure (12) opposée au siège, la plaquette de coupe comprenant
des dents principales de coupe (13) formées sur une portion de ligne de crête
disposée sur la périphérie de la plaquette de coupe dans une position adjacente à la surface supérieure (12),
des dents secondaires de coupe (14), chaque dent secondaire de coupe étant formée entre deux des dents principales de coupe (13), les dents secondaires de coupe (14) étant reliées aux deux dents principales de coupe par
des dents de coin (15) formées entre les dents principales de coupe et les dents secondaires de coupe et
une surface de pierrage (61, 62, 63, 64) placée sur 1a portion de ligne de crête, la surface de pierrage étant inclinée vers le bas, vers l'extérieur de la plaquette de coupe à un angle de pierrage (α, β, γ), **caractérisée en ce que**
l'angle de pierrage (γ) des dents de coin est supérieur à l'angle de pierrage (α) des dents principales de coupe et à l'angle de pierrage (β) des dents secondaires de coupe.

2. Plaquette de coupe selon la revendication 1, **caractérisée en ce que** la hauteur entre le siège (11) et la dent de coin (15) reliant une dent principale de coupe à une dent secondaire de coupe est inférieure à la hauteur entre le siège (11) et la dent secondaire de coupe (14).

3. Plaquette de coupe selon la revendication 1 ou 2, **caractérisée en ce que** l'angle de pierrage (α) des dents principales de coupe est réglé dans une plage de 0° < α < 60°, l'angle de pierrage (β) des dents secondaires de coupe est réglé dans une plage de 0° < β < 60° et l'angle de pierrage (γ) des dents de coin est réglé dans une plage de 5° < γ < 80°.
